# EUROPEAN PATENT SPECIFICATION

(11) **EP 1 009 563 B1**
(45) Date of publication and mention of the grant of the patent: **09.04.2003**
(21) Application number: 98928697.6
(22) Date of filing: 20.05.1998
(51) Int. Cl.: B22F 3/15, B30B 15/34

(54) **A DEVICE FOR HOT ISOSTATIC PRESSING**
VORRICHTUNG ZUM HEISSISOSTATISCHEN PRESSEN
DISPOSITIF DE COMPRESSION ISOSTATIQUE A CHAUD

(30) Priority: 13.06.1997 SE 9702255
(43) Date of publication of application: 21.06.2000
(73) Proprietor: Flow Holdings GmbH (SAGL) Limited Liability Company, 6919 Carabietta (CH)
(72) Inventor: BERGMAN, Carl, S-723 41 Västeras (SE)
(74) Representative: Henningsson, Gunnar
(86) International application number: PCT/SE98/00942
(87) International publication number: WO 98/056525

(56) References cited:
- EP-A- 0 395 884
- WO-A-97/20652
- US-A- 5 366 563

## Description

### FIELD OF THE INVENTION AND PRIOR ART

The present invention relates to a device for hot isostatic pressing comprising:
- a pressure vessel having a wall,
- a heat insulating mantle surrounding a furnace chamber and arranged internally of said wall with a first gap therebetween, said mantle being through a top part closed at the top and in the lower part thereof provided with openings to said gap on two levels so as to allow pressure medium to enter a cooling loop in said gap through the upper openings and emerge from the loop into a first space located below the furnace chamber through the lower openings,
- a first guiding means adapted to guide the pressure medium and which surrounds a load space in the furnace chamber adapted to receive loads to be pressed, said guiding means having an opening at the upper part thereof and an opening at the lower part thereof and being arranged to define a second gap therebetween and the heat insulating mantle so as to guide a flow of pressure medium upwardly inside the load space for, after reaching the top part of the heat insulating mantle, moving downwardly in the second gap to a second space located below the load space and above the first space, and
- first and second pump means, said first pump means being adapted to pump cooled pressure medium emanating from the cooling loop upwardly from the first space to the second pump means, which is arranged in the second space and to pump a mixture of the cooled pressure medium from the first pump means and warm pressure medium emanating from the second gap upwardly through the load space.

Hot isostatic pressing (HIP=Hot Isostatic Pressing) is a technique being more and more used thanks to the extraordinary results obtained thereby, and this technique is used e.g. to achieve a pressing out of so-called "shrinkages" in castings through heating in combination with very high gas pressures in said furnace chamber, such as for turbine blades for aircraft, so as to substantially increase the strength and lifetime thereof. Another field of use is manufacturing of products of a very compact material free from pores through pressing of powder and at the same time heating thereof.

Typical pressures in hot isostatic pressing are 500-5 000 bars, in which the temperature usually varies between 500 and 2 200°C. A temperature being approximately 75% of the fusion temperature of the material in question is normally selected. An inert gas, such as argon, is usually used as pressure medium.

A device of the type defined in the introduction is already known through the US patent 5 123 832 of the applicant, and said first and second pump means, which there are ejectors (jet pumps), are there driven for cooling of loads present in the load space after the heating phase has been terminated, but the invention is not restricted to a use of such a device for cooling purposes. Said pressure medium may also be a fluid as well as gaseous, but for simplifying the description and for illuminating the object of the invention the case of a gas as pressure medium will be described hereinafter.

The device already known is as such well functioning, but it has drawbacks in some respects. It is extremely important for the result of the hot isostatic pressing of the loads that the cooling thereof takes place in a controlled manner and at a desired speed, i.e. the number of degrees Kelvin per minute. It is then also important that the cooling takes place substantially homogeneously in the entire load space, so that each load gets the same properties. The movement of the gases upwardly in the load space takes in the device already known place in the opposite direction to the natural convection, since the gases entering the load space have a lower temperature than the loads and are gradually heated during the movement upwardly in the load space while cooling the loads, which makes it necessary that the gases are given a certain impulse by the second pump means for making the movement of the gases upwardly in the load space and then downwardly in said second gap possible. This means that this flow would completely stop in the case that the first pump means, which drives the second pump means, would be switched off during a short period of time for regulating the cooling power in this way, which is completely unacceptable and would lead to defects of the loads. The flow of the first pump means and by that the impulse of the second pump means have to be regulated should the cooling power be regulated, which is possible to do in steps, but this regulation is not sufficiently precise and very inert, since it takes a considerable time before the gases already present in the load space have reached the upper part and come out of the load space after a change of the power of the first pump means. Furthermore, a certain size of the impulse generated by the second pump means upon the gases pumped thereby is required so as to overcome the natural convection, so that the cooling power of the device already known may only be regulated within a restricted interval.

### SUMMARY OF THE INVENTION

The object of the present invention is to provide a device of the type defined in the introduction, which makes a more accurate regulation of the influence that the pressure medium pumped by the second pump means exerts on the loads in the load space possible within a considerably larger interval than in the device already known and discussed above.

This object is according to the invention obtained by providing a device of the type defined in the introduction with a third pump means arranged in the second space and to pump warm pressure medium emanating from said second gap to the second pump means for pumping this pressure medium by the second pump means and a control unit adapted to optionally switch the first and third pump means on and off.

By arranging said third pump means and said control unit for optionally switching the first and third pump means on and off, a possibility to a considerably more accurate regulation of the influence exerted by the pressure medium pumped through the second pump means through the load space upon the loads is obtained within a considerably broader interval than in the device already known. Thus, when the first pump means is switched off and the third pump means is switched on substantially warm pressure medium emanating from said second gap will be pumped through the second pump means upwardly through the load space, so that in the case of cooling of the loads the cooling effect will be considerably smaller than if instead only the first pump means is driven, but a good stirring and transport of the pressure medium upwardly in the load space are nevertheless ensured by the ability of the second pump means to give said pressure medium a sufficient impulse through the third pump means. Thus, it is possible to achieve a very accurate regulation of the cooling effect by alternatingly switching the first and third pump means on and off through the control unit without disturbing the stirring of the pressure medium in the load space and causing ununiformities of the cooling and by that of the products pressed. The cooling effect may be controlled by the length of the periods of time during which the respective pump means is switched on. However, it is pointed out that the field of use of the device according to the invention is not in any way restricted to cooling, but it would also be possible to keep the first pump means switched off and the third pump means switched on during the entire or parts of the heating phase of the hot isostatic pressing so as to obtain a good stirring of the pressure medium and by that a good uniformity of the influence thereof upon the loads and by that uniform properties of the loads independent of the localization thereof in the load space.

According to a preferred embodiment of the invention the device is adapted to cool said loads after a terminated heating phase and the second pump means is adapted to pump a pressure medium from the second space upwardly in the load space having a lower temperature than the temperature of the loads for heating thereof through heat transfer from the loads when moving upwardly in the load space, and the control unit is adapted to alternatingly switch said first and third pump means on and off, so that one of them at the time is pumping pressure medium to the second pump means. The cooling effect may be regulated accurately without disturbing the stirring through the second pump means of the gas in the load space by alternatingly switching the third pump means driving the second pump means without giving any substantial cooling effect and the first pump means driving the second pump means while generating a considerably larger cooling effect on in this way.

According to another preferred embodiment of the invention the control unit is adapted to keep the third pump means switched on and the first pump means switched off during the heating phase of the hot isostatic pressing for stirring the warm pressure medium. It will by this be possible to utilize the second pump means to ensure a good stirring of the pressure medium in the load space also during the very heating phase, so that the second pump means by this will have a broadened field of use and may contribute to improving the uniformity of the influence upon the loads during the heating phase of the hot isostatic pressing.

According to another preferred embodiment of invention the pressure medium is an inert gas and the second pump means is a jet pump adapted to be driven to pump warm gases emanating from said second gap through jets from the first pump means and the third pump means. It is by this possible to draw in considerably larger flows of warm gas emanating from the second gap into the second pump means through comparatively small flows from the first and third pump means and bring these flows into circulation passing the loads and downwardly in the second gap, so that a good stirring is obtained and the temperature difference between the gases passing the loads and the loads will not be too large.

According to another preferred embodiment of the invention the first pump means and the second pump means are jet pumps arranged to be driven through jets of gas having a lower temperature than the warm gas from the second gap and which emanates from a compressor arranged outside the pressure vessel. The first and third pump means may advantageously be driven by such cold gases, which have a temperature being too low for allowing them to directly enter into contact with the loads, but in the flow achieved by these pump means in the second pump means this gas will constitute only a fraction of the mass flow, so that the temperature thereof will be acceptable. A thorough mixing of the flows emanating from the first and third pump means with the warm gas emanating from said second gap takes also place in the second pump means. In the case of only having the third pump means switched on during said heating phase the main part of the flow delivered thereby will be formed by said warm gases, whereupon this flow in its turn will generate a still larger flow of warm gases from said second gap out of the second pump means and into the load space, so that the cold gas introduced into the third pump means will not influence the temperature of the gases entering the load space from the second pump means to an extent worth mentioning.

According to another preferred embodiment of the invention the first and third pump means are connected to the same compressor, and the control unit is arranged to control valve means of the outlet of the compressor for controlling the flow of cold gas from the compressor to the first or third pump means. This constitutes a very simple and reliable arrangement of the regulating possibilities of a device according to the invention, since it will reliably be ensured that only one of the first and third pump means is switched on at the time, which in practise is what is desired, although it would for sure be conceivable to have both switched on at the same time. Furthermore, the device and the control thereof will be simple by the use of one and the same compressor so as to drive both the first and third pump means.

According to another preferred embodiment of the invention the device comprises a bottom plate arranged to separate the first and the second space and by that the flow of warm pressure medium from the second gap and cooled pressure medium from the first gap from each other. A well-controlled regulation of the flow of pressure medium through the second pump means with respect to the proportion of warm and cold pressure medium emanating from the third and the first pump means, respectively, is by this obtained.

According to another preferred embodiment of the invention the third pump means is arranged in said bottom plate and has the outlet thereof directed upwardly, which constitutes an advantageous localization of the third pump means, and in a further development of this embodiment the device comprises a second channel means extending from the second space into the bottom plate for supply of warm pressure medium emanating from said second gap to the third pump means. The bottom plate may in this way in an advantageous way be used to conduct said warm pressure medium into the third pump means for pumping it through the third pump means to the second pump means.

Further advantages as well as advantageous features of the invention appear from the following description and the other dependent claims.

### BRIEF DESCRIPTION OF THE DRAWING

With reference to the appended drawing, below follows a description of a preferred embodiment of the invention cited as an example.

In the drawing:

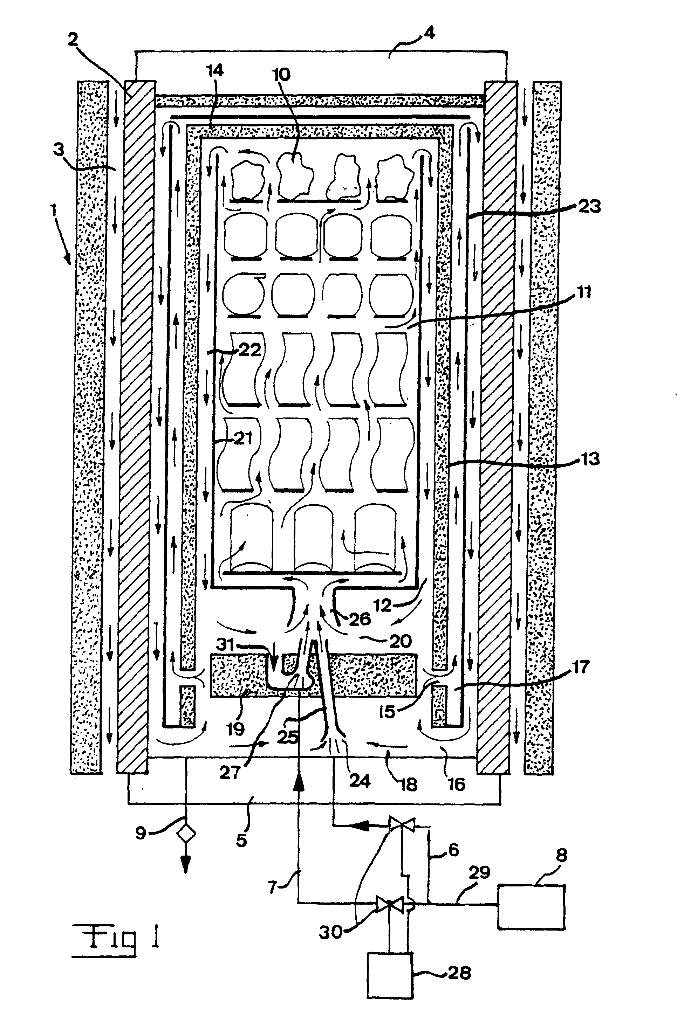

The single fig 1 is a sectioned view illustrating a device according to a preferred embodiment of the invention for hot isostatic pressing

### DETAILED DESCRIPTION OF A PREFERRED EMBODIMENT OF THE INVENTION

A hot isostatic press utilizing an inert gas, such as argon, as pressure medium and designed to be able to achieve a rapid cooling of the loads received therein at the end of a cycle of hot isostatic pressing is illustrated in fig 1. Such a rapid cooling of loads pressed is for example required in the manufacture of Ni-base alloys. It is for obtaining suitable material properties of these alloys without any demand of considerable heat treatment operations, such as heating and quenching after treatment in a hot isostatic press, required that the loads can be cooled rapidly also when they are present in the hot isostatic press. Ordinary treatment temperatures in such a hot isostatic press are 1 000-1 400°C, and the loads should be cooled down from these temperatures to 600°C with a speed of 40-155°C/minute.

The device has a pressure vessel 1 with a wall 2, which is provided with means 3 for water cooling thereof. The upper part and the bottom of the pressure chamber are provided with closing means 4 and 5, respectively. The bottom closing means 5 is provided with through tubes 6, 7 for supply of gas from a joint compressor located outside the pressure vessel. Furthermore, a tube 9 is arranged for discharging gas from the pressure chamber. It is not desired to change the amount of gas inside the chamber during rapid cooling of loads, so that the gas leaving the chamber through the tube 9 is then led back to the compressor 8 for pumping it around.

The loads 10 to be exerted to the hot isostatic pressing are placed in a load space 11 located in a furnace chamber 12, which is surrounded by a heat insulating mantle 13, which is closed at the top by a top part 14 and at the lower part thereof provided with openings 15, 16 to a first gap 17 between the wall 2 and the heat insulating mantle 13 on two levels so as to allow pressure medium to enter into a cooling loop in this gap through the upper openings 15 and emerging from the cooling loop into a first space 18 located below the furnace chamber through the lower openings 16.

Furthermore, the furnace chamber is at the bottom delimited by a heat insulating bottom plate 19, which is arranged to separate the first space 18 from a second space 20 located above the bottom plate but below the load space. The bottom plate 19 is mounted separately at the bottom of the pressure chamber and is not tightly connected to the insulating mantle 13. A first guiding means in the form of a basket 21 surrounds the load space in the furnace chamber and is arranged to guide warm gas upwardly through the load space while exchanging heat with the loads and then downwardly in a second gap 22 between the latter and the heat insulating mantle. The warm gases leave the second gap at the bottom to said second space 20.

The device has also second guiding means 23 formed by a sleeve for guiding the pressure medium circulation in said cooling loop in the first gap 17, so that the gas circulates in the direction upwardly without contact with the vessel wall and downwardly in contact with the vessel wall 2, and the second guiding means has an open upper part for guiding pressure medium arriving thereto to enter into a space between the second guiding means and the vessel wall for flowing downwardly therein.

The device has also a first pump means 24 in the form of a jet pump or ejector, which is arranged to be provided with a jet of cold gas from the compressor 8 through the conduit 6. This first pump means is then arranged in the first space 18 and to give cooled gas emanating from the cooling loop in said first gap 17 an impulse and by that pump it into a first channel means 25 leading through the bottom plate 19 to a second pump means 26 located in the second space 20. The main flow through the channel means 25 will by that be constituted by gas emanating from said cooling loop, while only a proportion of at the most a fifth will consist of cold gas from the compressor 8. The flow formed in this way through the channel means 25 will drive the second pump means 26, which accordingly also is constituted by a jet pump or ejector, in which warm gases emanating from the second gap 22 will receive an impulse from the flow from the first pump means, the magnitude of said impulse being proportional to the mass flow and speed of said flow, and be mixed therewith, so that this mixture well stirred having a somewhat lower temperature than the loads will be pumped into the load space at the bottom.

The device has also a third pump means 27, which, is arranged to receive cold driving gas from the compressor 8 through the conduit 7 and function as a jet pump or ejector and give warm gases emanating from the second gap 22 an impulse in the direction towards the second pump means 26 so as to drive it. The third pump means is arranged in the bottom plate 19, which has a second channel means 31 for conducting warm gases from the second space 20 to the third pump means.

The device has also a control unit 28 adapted to influence two-way valve means 30 connected in parallel in the outlet conduit 29 from the compressor 8 for conducting the cold gas driving from the compressor 8 either to the first pump means 24 or to the third pump means 27. Thus, one of these valve means is always kept open and the other closed. A single three-way valve would instead in principle be possible, but there are at the present no three-way valves that can withstand the pressures in question.

The device according to the invention functions in the following way. When the heating phase of the hot isostatic pressing has been terminated and it is desired to obtain a comparatively rapid, but nevertheless uniform cooling of the loads 10, the control unit 28 controls the valve means 30 to alternatingly drive the first pump means and the third pump means and by that let the mass flows thereof alternatingly drive the second pump means. When the first pump means is driven the gas jet driving the second pump means will primarily contain cooled gas emanating from the cooling loop through the opening 16, which will in the second pump means 26 draw warm gas from the second gap 22, so that these are well mixed and a gas flow upwardly in the load space 11 is formed. This gas flow will when entering the load space have a temperature being somewhat lower than the temperature of the loads and by that be heated during the movement thereof upwardly in the load space, so that this flow has to be pumped through the pump means 26 against the direction of the natural convection. A part of the warm gases entering the second space 20 from the gap 22 will be drawn into the second pump means 26, while a part will exit through the heat insulating mantle through the opening 15 and then circulate in the cooling loop formed therein through natural convection for emerging into said first space 18 through the opening 16. A part of this cooled gas from the opening 16 will then go upwardly and enter the cooling loop again through the opening 15 together with the warm gas, while a part moves to the first pump means 24.

If the valve means 30 is then controlled by the control unit 28 to connect the third pump means through the conduit 7 to the compressor 8 instead for feeding cold gases thereto, these cold gases will instead give warm gases in the first space through the second channel means an impulse upwardly towards the second pump means 26 and form the jet driving it, which in its turn gives warm gases from the gap 22 in the second pump means 26 an impulse upwardly, so that a stirring is obtained and a substantially homogenous gas mixture with a temperature being only slightly lower than the temperature of the loads will be fed upwardly through the load space, The third pump means may during the very heating phase be operated to alone drive the second pump means 26 for good stirring of the warm gases passing the loads, in which heating elements not shown in the drawing and arranged along the heat insulating mantle will compensate for the somewhat lower temperature received by these gases as a consequence of the smaller proportion therein of cold gas mixed thereinto in the third pump means.

The control unit 28 may control the valve means 30 to alternatingly switch in the first pump means or the third pump means during short time intervals when the loads 10 are cooled rapidly so as to obtain a very accurate regulation of the cooling effect without disturbing the stirring of the gas in the load space.

The invention is of course not in any way restricted to the preferred embodiment described above, but many possibilities to modifications thereof would be apparent to a man skilled in the art, without departing from the basic idea of the invention such as it appears from the claims.

It would for example be well possible to use another pressure medium than gas, for example oil. Such a press may be used for manufacturing explosives.

It would also be possible to bring the two outlets of the two channel means from the first and third pump means together to a channel means in common emerging into the second pump means.

Furthermore, the device may rave more than one first and third pump means.

The claim definition "third pump means" is to be given the meaning that it also comprises the case in which no pump means in the real sense thereof is present, but the pressure medium jet coming from the compressor is led directly out into the second pump means through the conduit 7. This jet is then considered to form said third pump means, which accordingly then forms a part of the second pump means. However, it is pointed out that it is advantageous to arrange the nozzle of the third pump means further below, such as shown in fig 1, for protection thereof.

## Claims

1. A device in hot isostatic pressing comprising:
• a pressure vessel (1) having a wall (2),
• a heat insulating mantle (13) surrounding a furnace chamber (12) and arranged internally of said wall with a first gap (17) therebetween, said mantle being closed at the top (14) and in the lower part thereof provided with upper and lower openings (15, 16) to said gap on two levels so as to allow pressure medium to enter a cooling loop in said gap through the upper openings (15) and emerge from the loop into a first space (18) located below the furnace chamber through the lower openings (16),
• a first guiding means (21) adapted to guide the pressure medium and which surrounds a load space (11) in the furnace chamber adapted to receive loads (10) to be pressed, said guiding means having an opening at the upper part thereof and an opening at the lower part thereof and being arranged to define a second gap (22) therebetween and the heat insulating mantle so as to guide a flow of pressure medium upwardly inside the load space for, after reaching the top part of the heat insulating mantle, moving downwardly in the second gap to a second space (20) located below the load space and above the first space, and
• first and second pump means, said first pump means (24) being adapted to pump cooled pressure medium emanating from the cooling loop upwardly from the first space (18) to the second pump means (26), which is arranged in the second space (20) and to pump a mixture of the cooled pressure medium from the first pump means and warm pressure medium emanating from the second gap upwardly through the load space,
**characterized in that** it comprises a third pump means (27) arranged in the second space (20) and to pump warm pressure medium emanating from said second gap (22) to the second pump means (26) for pumping this pressure medium by the second pump means, and that it also comprises a control unit (28) adapted to optionally switch the first and third pump means on and off.

2. A device according to claim 1, **characterized in that** it is adapted to cool said loads (10) after a terminated heating phase and the second pump means (26) is adapted to pump a pressure medium from the second space (20) upwardly in the load space having a lower temperature than the temperature of the loads for heating thereof through heat transfer from the loads when moving upwardly in the load space, and that the control unit is adapted to alternatingly switch said first and third pump means on and off, so that one of them at the time is pumping pressure medium to the second pump means.

3. A device according to claim 1, **characterized in that** the control unit (28) is adapted to keep the third pump means (27) switched on and the first pump means switched off during the heating phase of the hot isostatic pressing for stirring the warm pressure medium.

4. A device according to any of claims 1-3, **characterized in that** the pressure medium is an inert gas.

5. A device according to claim 4, **characterized in that** the second pump means (26) is a jet pump adapted to be driven to pump warm gases emanating from said second gap (20) through jets from the first pump means (24) and the pump means (27).

6. A device according to claim 4 or 5, **characterized in that** the first pump means (24) and the third pump means (27) are jet pumps arranged to be driven through jets of gas having a lower temperature than the warm gas from the second gap and which emanates from a compressor (8) arranged outside the pressure vessel.

7. A device according to claims 2 and 6, **characterized in that** the first (24) and the third (27) pump means are connected to the same compressor, and that the control unit is arranged to control valve means (30) of the outlet (29) of the compressor for controlling the flow of cold gas from the compressor to the first or third pump means.

8. A device according to any of claims 1-7, **characterized in that** it has a bottom plate (19) arranged to separate the first (18) and the second (20) space and by that the flow of warm pressure medium from the second gap (22) and cooled pressure medium from the first gap (17) from each other.

9. A device according to claim 8, **characterized in that** said bottom plate (19) is made of heat insulating material.

10. A device according to claim 8 or 9, **characterized in that** an opening enabling communication between said first (18) and second (20) spaces is arranged between the heat insulating mantle and the bottom plate.

11. A device according to any of claims 8-10, **characterized in that** it comprises a first channel means (25) arranged to conduct a pressure medium from the first pump means (24) through the bottom plate to the second pump means (26).

12. A device according to any of claims 8-11, **characterized in that** the third pump means (27) is arranged in said bottom plate and has the outlet thereof directed upwardly.

13. A device according to claim 12, **characterized in that** it comprises a second channel means (31) extending from the second space (20) into the bottom plate for supply of warm pressure medium emanating from said second gap to the third pump means.

14. A device according to any of claims 1-13, **characterized in that** it comprises second guiding means (23) for guiding the circulation of pressure medium in the cooling loop in said first gap (17), so that the pressure medium circulates in the direction upwardly without any contact with the vessel wall (2) and in the direction downwardly in contact with the vessel wall, and that the second guiding means has an open upper part for guiding pressure medium arriving thereto to enter into a space between the second guiding means and the vessel wall for flowing downwardly therein.

15. A device according to any of claims 1-14, **characterized in that** the openings (15, 16) in the heat insulating mantle (13) and the first pump means (24) have such a mutually location that a part of the cooled pressure medium entering into the first space from said first gap enters into the cooling loop again through the upper openings (15) in the heat insulating mantle.

## Patentansprüche

1. Vorrichtung beim isostatischen Heißpressen umfassend:
- einen Druckbehälter (1) mit einer Wandung (2),
- einen wärmeisolierenden Mantel (13) welcher eine Ofenkammer (12) umgibt und innerhalb der Wand mit einem ersten Spalt (17) dazwischen angeordnet ist, wobei der Mantel an seiner Oberseite (14) geschlossen ist und in seinem unteren Bereich auf zwei Ebenen mit oberen und unteren Öffnungen (15, 16) zu diesem Spalt versehen ist, um es einem Druckmedium zu ermöglichen, in eine Kühlschleife in diesem Spalt durch die oberen Öffnungen (15) zu gelangen und aus der Schleife in einen ersten Raum (18), welcher unterhalb der Ofenkammer angeordnet ist, durch die unteren Öffnungen (16) auszuströmen,
- eine erste Leiteinrichtung (21), welche dazu ausgebildet ist, das Druckmedium zu leiten und welche einen Besatzraum (11) umgibt, der sich in der Ofenkammer befindet und dazu ausgebildet ist, zu pressende Besätze (10) aufzunehmen, wobei die Leiteinrichtung eine Öffnung an einem oberen Teil hiervon und eine Öffnung an dem unteren Teil hiervon aufweist und so angeordnet ist, dass ein zweiter Spalt (22) hierzwischen und dem wärmeisolierenden Mantel gebildet wird, um einen Druckmediumfluss innerhalb des Besatzraums aufwärts zu leiten, der sich, nachdem der obere Teil des wärmeisolierenden Mantels erreicht wurde, im zweiten Spalt zu einem zweiten Raum (20), abwärts bewegt, welcher sich unterhalb des Besatzraums und oberhalb des ersten Raums befindet, und
- eine erste und eine zweite Pumpeinrichtung, wobei die erste Pumpeinrichtung (24) so ausgebildet ist, dass sie gekühltes Druckmedium, welches von der Kühlschleife ausströmt, vom ersten Raum (18) aufwärts in die zweite Pumpeinrichtung (26), welche im zweiten Raum (20) angeordnet ist, pumpt und welche eine Mischung aus gekühltem Druckmedium aus der ersten Pumpeinrichtung und warmem Druckmedium, welches aus dem zweiten Spalt ausströmt, aufwärts durch den Besatzraum pumpt, **dadurch gekennzeichnet, dass**
- sie eine im zweiten Raum (20) angeordnete dritte Pumpeinrichtung (27) aufweist, welche aus dem zweiten Spalt (22) ausströmendes, warmes Druckmedium zu der zweiten Pumpeinrichtung (26) pumpt, um dieses Druckmedium von der zweiten Pumpeinrichtung pumpen zu lassen, und dass sie zudem eine Steuereinheit (28) umfasst, welche zum wahlweisen An- und Ausschalten der ersten und der dritten Pumpeinrichtung ausgebildet ist.

2. Vorrichtung nach Anspruch 1, **dadurch gekennzeichnet, dass**
sie dazu ausgebildet ist, die Besätze (10) nach einer beendeten Heizphase zu kühlen, und die zweite Pumpeinrichtung (26) dazu ausgebildet ist, ein Druckmedium, welches eine niedrigere Temperatur aufweist als die Temperatur der Besätze, zum Aufheizen desselben durch Wärmeübertragung von den Besätzen wenn es sich aufwärts in den Besatzraum bewegt, vom zweiten Raum (20) aufwärts in den Besatzraum zu pumpen, und dass die Steuereinheit dazu ausgebildet ist, die erste und die dritte Pumpeinrichtung wechselnd an- und auszuschalten, so dass immer nur eine von ihnen Druckmedium zu der zweiten Pumpeinrichtung pumpt.

3. Vorrichtung nach Anspruch 1, **dadurch gekennzeichnet, dass**
die Steuereinheit (28) dazu ausgebildet ist, zum Umwälzen des warmen Druckmediums die dritte Pumpeinrichtung (27) während der Heizphase des isostatischen Heißpressens angeschaltet und die erste Pumpeinrichtung ausgeschaltet zu lassen.

4. Vorrichtung nach einem der Ansprüche 1 bis 3, **dadurch gekennzeichnet, dass** das Druckmedium ein inertes Gas ist.

5. Vorrichtung nach Anspruch 4, **dadurch gekennzeichnet, dass**
die zweite Pumpeinrichtung eine Strahlpumpe ist, die dazu ausgebildet ist, durch Strahlen aus der ersten Pumpeinrichtung (24) und der Pumpeinrichtung (27) angetrieben zu werden, um warme Gase zu pumpen, die aus dem zweiten Spalt (20) ausströmen.

6. Vorrichtung nach Anspruch 4 oder 5, **dadurch gekennzeichnet, dass**
die erste Pumpeinrichtung (24) und die dritte Pumpeinrichtung (27) Strahlpumpen sind, die so angeordnet sind, dass sie durch Gasstrahlen angetrieben werden, welche eine geringere Temperatur haben als die warmen Gase aus dem zweiten Spalt und welche aus einem Kompressor (8) ausströmen, welcher außerhalb des Druckbehälters angeordnet ist.

7. Vorrichtung nach den Ansprüchen 2 und 6, **dadurch gekennzeichnet, dass**
die erste (24) und die dritte (27) Pumpeinrichtung mit demselben Kompressor verbunden sind, und dass die Steuereinheit so angeordnet ist, dass sie eine Ventileinrichtung (30) des Auslasses (29) des Kompressors steuert, welche den Fluss von kaltem Gas aus dem Kompressor zu der ersten oder der dritten Pumpeinrichtung steuert.

8. Vorrichtung nach einem der Ansprüche 1 bis 7, **dadurch gekennzeichnet, dass**
sie eine Bodenplatte (19) besitzt, welche so angeordnet ist, dass sie den ersten (18) und zweiten (20) Raum trennt und hierdurch den Fluss von warmem Druckmedium aus dem zweiten Spalt (22) und gekühltem Druckmedium aus dem ersten Spalt (17) voneinander trennt.

9. Vorrichtung nach Anspruch 8, **dadurch gekennzeichnet, dass**
die Bodenplatte (19) aus wärmeisolierendem Material ausgebildet ist.

10. Vorrichtung nach Anspruch 8 oder 9, **dadurch gekennzeichnet, dass**
eine Öffnung so zwischen dem wärmeisolierenden Mantel und der Bodenplatte angeordnet ist, dass eine Verbindung zwischen dem ersten (18) und dem zweitem (20) Raum ermöglicht ist.

11. Vorrichtung nach einem der Ansprüche 8 bis 10, **dadurch gekennzeichnet dass**
sie eine erste Kanaleinrichtung (25) umfasst, angeordnet, um ein Druckmedium von der ersten Pumpeinrichtung (24) durch die Bodenplatte zu der zweiten Pumpeinrichtung (26) zu führen.

12. Vorrichtung nach einem der Ansprüche 8 bis 11, **dadurch gekennzeichnet, dass**
die dritte Pumpeinrichtung (27) in der Bodenplatte angeordnet ist, und der Auslass hiervon nach oben gerichtet ist.

13. Vorrichtung nach Anspruch 12, **dadurch gekennzeichnet, dass**
sie eine zweite Kanaleinrichtung (31) umfasst, welche sich von dem zweiten Raum (20) in die Bodenplatte erstreckt, um warmes Druckmedium, welches aus dem zweiten Spalt ausströmt, der dritten Pumpeinrichtung zuzuführen.

14. Vorrichtung nach einem der Ansprüche 1 bis 13, **dadurch gekennzeichnet, dass**
es eine zweite Leiteinrichtung (23) umfasst, zum Leiten der Zirkulation von Druckmedium in der Kühlschleife in dem ersten Spalt (17), so dass das Druckmedium in der Aufwärtsrichtung ohne jeglichen Kontakt mit der Behälterwand (2) und in der Abwärtsrichtung in Kontakt mit der Behälterwand zirkuliert, und dass die zweite Leiteinrichtung einen offenen oberen Teil zum Leiten von dort ankommendem Druckmedium besitzt, so dass es in einen Raum zwischen der zweiten Leiteinrichtung und der Behälterwand gelangt, um darin nach unten zu fließen.

15. Vorrichtung nach einem der Ansprüche 1 bis 14, **dadurch gekennzeichnet, dass** die Öffnungen (15, 16) in dem wärmeisolierenden Mantel (13) und die erste Pumpeinrichtung (24) derart zueinander angeordnet sind, dass ein Teil des gekühlten Druckmediums, der aus dem ersten Spalt in den ersten Raum gelangt, erneut durch die oberen Öffnungen (15) in dem wärmeisolierenden Mantel in die Kühlschleife gelangt.

## Revendications

1. Dispositif de compression isostatique à chaud, comprenant :
- une enceinte (1) sous pression ayant une paroi (2),
- une chemise (13) qui est thermiquement isolante, qui entoure une chambre (12) de four et qui est disposée à l'intérieur de la paroi avec un premier intervalle (17) entre eux, la chemise étant fermée au sommet (14) et étant munie dans sa partie inférieure d'ouvertures (15, 16) supérieures et inférieures débouchant dans l'intervalle à deux niveaux, de manière à permettre à un fluide sous pression d'entrer dans une boucle de refroidissement dans cet intervalle par les ouvertures (15) supérieures et de sortir de la boucle pour aller dans un premier espace (18) disposé en dessous de la chambre de four en passant par les ouvertures (16) inférieures,
- un premier moyen (21) de guidage destiné à guider le fluide sous pression et entourant un espace (11) pour une charge dans la chambre du four qui est destinée à recevoir des charges (10) à comprimer, le moyen de guidage ayant une ouverture à sa partie supérieure et une ouverture à sa partie inférieure et étant conçu pour définir un deuxième intervalle (22) entre lui et la chemise thermiquement isolante de manière à guider un courant de fluide sous pression vers le haut dans l'espace pour les charges pour que, après avoir atteint la partie de sommet de la chemise thermiquement isolante, il se déplace vers le bas dans le deuxième intervalle vers un deuxième espace (20) disposé en dessous de l'espace pour les charges et au dessus du premier espace, et
- un premier et un deuxième moyens de pompage, le premier moyen (24) de pompage étant destiné à pomper du fluide sous pression refroidi provenant de la boucle de refroidissement vers le haut à partir du premier espace (18) en direction du deuxième moyen (26) de pompage qui est disposé dans le deuxième espace (20) et qui est destiné à pomper un mélange du fluide sous pression refroidi à partir du premier moyen de pompage et du fluide sous pression chaud provenant du deuxième intervalle vers le haut en passant dans l'espace destiné aux charges,
**caractérisé en ce qu'**il comprend un troisième moyen (27) de pompage disposé dans le deuxième espace (20) et destiné à pomper du fluide sous pression chaud provenant du deuxième intervalle (22) pour l'envoyer au deuxième moyen (26) de pompage afin de pomper ce fluide sous pression par le deuxième moyen de pompage et **en ce qu'**il comprend aussi une unité (28) de commande destinée à mettre en fonctionnement et hors de fonctionnement éventuellement les premier et troisième moyens de pompage.

2. Dispositif suivant la revendication 1, **caractérisé en ce qu'**il est conçu, pour refroidir les charges (10) après qu'une phase de chauffage est achevée et le deuxième moyen (26) de pompage est destiné à pomper un fluide sous pression du deuxième espace (20) vers le haut dans l'espace pour les charges ayant une température inférieure à la température des charges en vue de les chauffer par transfert thermique à partir des charges lorsqu'elles se déplacent vers le haut dans l'espace pour les charges et **en ce que** l'unité de commande est conçue pour mettre en alternance en fonctionnement et hors de fonctionnement les premier et troisième moyens de pompage, de sorte que l'un d'entre eux à la fois envoie par pompage du fluide sous pression au deuxième moyen de pompage.

3. Dispositif suivant la revendication 1, **caractérisé en ce que** l'unité (28) de commande est conçue pour maintenir en fonctionnement le troisième moyen (27) de pompage et pour mettre hors de fonctionnement le premier moyen de pompage pendant la phase de chauffage du pressage isostatique à chaud afin d'agiter le fluide sous pression chaud.

4. Dispositif suivant l'une quelconque des revendications 1 à 3, **caractérisé en ce que** le fluide sous pression est un gaz inerte.

5. Dispositif suivant la revendication 4, **caractérisé en ce que** le second moyen (26) de pompage est une pompe à jet destinée à être entraînée pour pomper des gaz chauds provenant du deuxième intervalle (20) par des jets provenant du premier moyen (24) de pompage et du moyen (27) de pompage.

6. Dispositif suivant la revendication 4 ou 5, **caractérisé en ce que** le premier moyen (24) de pompage et le troisième moyen (27) de pompage sont des pompes à jet destinées à être entraînées par des jets de gaz ayant une température inférieure au gaz chaud provenant du deuxième intervalle et qui proviennent d'un compresseur (8) disposé à l'extérieur de l'enceinte sous pression.

7. Dispositif suivant les revendications 2 et 6, **caractérisé en ce que** le premier (24) et le troisième (27) moyens de pompage communiquent avec le même compresseur et **en ce que** l'unité de commande est destinée à commander des moyens (30) à vanne de la sortie (29) du compresseur afin de se rendre maitre du débit de gaz froid allant du compresseur aux premier et troisième moyens de pompage.

8. Dispositif suivant l'une quelconque des revendications 1 à 7, **caractérisé en ce qu'**il a une plaque (19) de fond destinée à séparer le premier (18) et le deuxième (20) espaces et par laquelle le courant de fluide sous pression chaud provenant du second intervalle (22) et le courant de fluide sous pression refroidi provenant du premier intervalle (17) sont séparés l'un de l'autre.

9. Dispositif suivant la revendication 8, **caractérisé en ce que** la plaque (19) de fond est en un matériau thermiquement isolant.

10. Dispositif suivant la revendication 8 ou 9, **caractérisé en ce qu'**une ouverture permettant une communication entre le premier (18) et le deuxième (20) espaces est disposée entre l'enveloppe thermiquement isolante et la plaque de fond.

11. Dispositif suivant l'une quelconque des revendications 8 à 10, **caractérisé en ce qu'**il comprend un premier moyen (25) de canalisation destiné à conduire un fluide sous pression du premier moyen (24) de pompage au deuxième moyen (26) de pompage en passant à travers la plaque de fond.

12. Dispositif suivant l'une quelconque des revendications 8 à 11, **caractérisé en ce que** le troisième moyen (27) de pompage est disposé dans la plaque de fond et sa sortie est dirigée vers le haut.

13. Dispositif suivant la revendication 12, **caractérisé en ce qu'**il comprend un deuxième moyen (31) de canalisation allant du deuxième espace (20) à la plaque de fond et destiné à alimenter le troisième moyen de pompage en fluide sous pression chaud provenant du deuxième intervalle.

14. Dispositif suivant l'une quelconque des revendications 1 à 13, **caractérisé en ce qu'**il comprend des deuxièmes moyens (23) de guidage destinés à guider la circulation du fluide sous pression dans la boucle de refroidissement dans le premier intervalle (17) de sorte que le fluide sous pression circule dans la direction allant vers le haut sans contact avec la paroi (2) de l'enceinte et dans la direction vers le bas en contact avec la paroi de l'enceinte et **en ce que** les deuxièmes moyens de guidage ont une partie supérieure ouverte pour guider du fluide sous pression y arrivant afin de le faire entrer dans un espace compris entre les deuxièmes moyens de guidage et la paroi de l'enceinte afin de s'y écouler vers le bas.

15. Dispositif suivant l'une quelconque des revendications 1 à 14, **caractérisé en ce que** les ouvertures (15, 16) de la chemise (13) thermiquement isolante et le premier moyen (24) de pompage ont un emplacement mutuel tel qu'une partie du fluide sous pression refroidi entrant dans le premier espace en provenance du premier intervalle entre dans la boucle de refroidissement à nouveau par les ouvertures (15) supérieures de l'enveloppe thermiquement isolante.
